# EUROPÄISCHE PATENTSCHRIFT

(11) **EP 1 711 727 B1**
(45) Veröffentlichungstag und Bekanntmachung des Hinweises auf die Patenterteilung: **25.06.2008**
(21) Anmeldenummer: 05707158.1
(22) Anmeldetag: 03.02.2005
(51) Int. Cl.: F16H 63/20, F16H 63/30

(54) **SCHALTVORRICHTUNG**
GEAR-SHIFTING DEVICE
SYSTEME DE CHANGEMENT DE VITESSES

(30) Priorität: 03.02.2004 DE 102004006443
(43) Veröffentlichungstag der Anmeldung: 18.10.2006
(73) Patentinhaber: GETRAG Getriebe- und Zahnradfabrik Hermann Hagenmeyer GmbH & Cie KG, 74199 Untergruppenbach (DE)
(72) Erfinder: BROSI, Matthias, 71720 Oberstenfeld (DE); DOOTZ, Burghard, 71067 Sindelfingen (DE); TEUTEBERG, Rolf, 74321 Bietigheim (DE)
(74) Vertreter: Steil, Christian
(86) Internationale Anmeldenummer: PCT/EP2005/001065
(87) Internationale Veröffentlichungsnummer: WO 2005/075856

(56) Entgegenhaltungen:
- EP-A- 0 893 628
- DE-A1- 10 316 423
- DE-C1- 19 742 065
- GB-A- 2 130 664
- US-A- 4 273 004
- US-A- 4 520 685
- US-A- 5 018 404
- US-B1- 6 234 038

## Beschreibung

Die vorliegende Erfindung betrifft eine Schaltvorrichtung gemäß dem Oberbegriff des Anspruchs 1 (DE 103 16 423 A1).

Die vorliegende Erfindung betrifft generell eine Schaltvorrichtung zum Anwählen und Schalten von Gangstufen eines Wechselgetriebes, insbesondere für Kraftfahrzeuge, mit mehreren Schaltgliedern, die zur Betätigung von zugeordneten Schaltmuffen in axialer Richtung beweglich gelagert sind und jeweils einen Mitnehmer aufweisen, mit einer drehbar und verschieblich gelagerten Schaltwelle, die einen Schaltfinger aufweist, der wahlweise jeweils an einem Mitnehmer angreift, um das jeweilige Schaltglied bei einer Bewegung der Schaltwelle mitzunehmen, und mit einer Schaltkulisse.

Eine derartige Schaltvorrichtung ist bekannt aus der EP 0 893 628 A1.

Derartige Schaltvorrichtungen sind insbesondere für Handschaltgetriebe geeignet, jedoch prinzipiell auch für automatisierte Schaltgetriebe (ASGs), für Doppelkupplungsgetriebe (DKGs) etc.

Die Schaltglieder können beispielsweise als Schaltgabeln oder Schaltwippen ausgebildet sein.

Die Schaltkulisse bzw. Schaltführung dient generell zum Positionieren der Mitnehmer in Bezug auf den Schaltfinger.

Dies kann bei bekannten Schaltungssystemen beispielsweise durch Zentrierung des Schaltgabelrachens auf der jeweiligen Schaltmuffe erfolgen.

Dies führt jedoch zu großen Abweichungen der Mitnehmerlage in Bezug auf die Sollposition. Daher ergibt sich eine Verschlechterung des Schaltkomforts. Rundlauftoleranzen der Schaltmuffe werden auf die Schaltgabel und den Schaltfinger übertragen. Dies verursacht ein schlechteres Schaltgefühl.

Alternativ hierzu erfolgt im Stand der Technik die Positionierung der Mitnehmer in Bezug auf den Schaltfinger durch eine Schaltkulisse, in der jeder Mitnehmer einzeln geführt wird. Dies ist beispielsweise in der eingangs genannten EP 0 893 628 A1 offenbart.

Die Schaltkulisse der EP 0 893 628 A1 weist drei separate Kulissengassen für die drei Mitnehmer auf, wobei die Kulissengassen durch eine Zentralgasse miteinander verbunden sind.

Dies führt zu einer sehr guten Positionierung der Mitnehmer zueinander sowie in Bezug auf den Schaltfinger. Nachteilig ist jedoch, dass die Mitnehmer vergleichsweise weit voneinander beabstandet sind. Dies wird bei der Ausführung des Wählvorgangs (Gassenwechsel) als nachteilig empfunden.

Ein weiterer Nachteil bekannter Schaltvorrichtungen besteht darin, dass sich eine Übersetzung des Schaltweges bei der Rückwärtsgang-Schaltung mittels eines Schieberades nur durch eine aufwendige Mechanik realisieren lässt, die eine Mehrzahl von Teilen aufweist.

Ferner ist aus der DE 102 13 668 A1 eine Schaltvorrichtung für ein Wechselgetriebe bekannt, bei der eine Schaltwelle zum Wählen in Längsrichtung und zum Schalten in Drehrichtung bewegt wird. Die Schaltwelle ist an einem Gehäuse geführt, an dem eine Schaltkulisse vorgesehen ist. Die Schaltkulisse führt nur die Schaltwelle, so dass Schwingungen der Schaltgabeln auf die Schaltwelle und damit das Schaltgestänge übertragen werden können.

Vor dem obigen Hintergrund ist es die Aufgabe der Erfindung, eine verbesserte Schaltvorrichtung zum Anwählen und Schalten von Gangstufen eines Wechselgetriebes anzugeben.

Diese Aufgabe wird gemäß der Erfindung durch eine Schaltvorrichtung gemäß Anspruch 1 gelöst, wobei wenigstens zwei Schaltglieder in axialer Richtung gegeneinander geführt sind und dass diese Schaltglieder als Paket in der Schaltkulisse geführt sind.

Hierdurch wird eine exakte Führung der Mitnehmer gewährleistet, insbesondere zum Schaltfinger.

Toleranzen zwischen den Radsätzen des Wechselgetriebes und der Lagerung der Schaltvorrichtung im Gehäuse können aufgefangen werden, so dass die Schaltqualität nicht beeinträchtigt wird.

Eine Zentrierung der Schaltglieder (Schaltgabeln) mittels der jeweiligen Schaltmuffen ist nicht notwendig. Die Schaltglieder können daher so ausgelegt bzw. konstruiert werden, dass sie die jeweilige Schaltmuffe nicht berühren. Durch diese Entkopplung ist die Weitergabe von Anregungen aus dem Wechselgetriebe in die Schaltvorrichtung und über ein Schaltgestänge auf beispielsweise einen Handschalthebel verringert, im Idealfall sogar vollständig vermieden.

Die wechselseitige Führung der Schaltglieder in axialer Richtung kann durch definierte Flächen an den Schaltgliedern erfolgen.

Da die Schaltglieder als Paket in der Schaltkulisse geführt werden, kann der Abstand zwischen den Mitnehmern sehr gering gehalten werden, was den Schaltkomfort beim Wählen (Gassenwechsel) deutlich verbessert. Auch können die Toleranzen zueinander durch diese Maßnahme sehr gering gehalten werden.

Die Schaltkulisse kann beispielsweise durch ein Schaltungsgehäuse eingerichtet werden, das beispielsweise aus Blech aufgebaut sein kann.

Vorzugsweise ist ein Schaltglied für eine Rückwärtsgangstufe direkt mit dem Mitnehmer eines Schaltgliedes gekoppelt, dem nur eine einzelne Vorwärtsgangstufe zugeordnet ist.

Hierdurch kann die Konstruktion zur Betätigung des Rückwärtsganges, insbesondere mittels eines Schieberades, deutlich vereinfacht werden.

Insgesamt kann so der Bauteilaufwand als auch möglicherweise das Gewicht der Schaltvorrichtung reduziert werden.

Bei der Erfindung ist es so, dass die Schaltglieder jeweils einen Schaltgliedkörper aufweisen, an dem der jeweilige Mitnehmer befestigt ist.

Gemäß der Erfindung ist der Mitnehmer als separates Bauteil (beispielsweise gehärtetes Bauteil) hergestellt, das mit dem Schaltgliedkörper verbunden ist, wobei der Mitnehmer in den Schaltgliedkörper eingegossen ist.

Bevorzugt ist an dem Schaltgliedkörper ein Rachen zum Umgreifen einer jeweiligen Schaltmuffe vorgesehen.

Gemäß einer bevorzugten Ausführungsform sind die Mitnehmer der Schaltglieder als Paket in der Schaltkulisse geführt.

Obgleich es generell denkbar ist, einen anderen Abschnitt der Schaltglieder als Paket in der Schaltkulisse zu führen, ist die genannte Ausführungsform besonders bevorzugt.

Insbesondere dann, wenn die Mitnehmer aus einem abriebfesten Material hergestellt sind, kann so eine langlebige Kulissenführung realisiert werden.

Da die Mitnehmer in der Regel mittels eines einzelnen Schaltfingers der Schaltwelle betätigt werden, ist es ferner so, dass die Mitnehmer aus konstruktiven Gründen ohnehin eng beieinander angeordnet sein sollten. Daher ist es auch konstruktiv besonders günstig, die Mitnehmer in der Schaltkulisse als Paket zu führen.

Gemäß einer weiteren bevorzugten Ausführungsform sind die Mitnehmer der Schaltglieder voneinander beabstandet.

Obgleich die Mitnehmer generell auch unmittelbar aneinander liegen könnten (d.h. ohne Beabstandung), ist ein gewisser, wenn auch sehr geringer Abstand vorteilhaft, da hierdurch die wechselseitige Reibung verringert werden kann. Zudem ist diese Ausführungsform fertigungstechnisch günstig zu realisieren, insbesondere, wenn Mitnehmer in einen Schaltgliedkörper eingegossen werden.

Es versteht sich hierbei, dass der Abstand in der Regel deutlich geringer sein kann als im Stand der Technik, bei dem die Mitnehmer in einzelnen Gassen einer Schaltkulissenführung geführt werden, also nicht im "Paket".

Gemäß einer weiteren bevorzugten Ausführungsform sind die Schaltglieder an Abschnitten außerhalb der Schaltkulisse gegeneinander geführt.

Alternativ hierzu ist es jedoch auch möglich, dass die Schaltglieder an Abschnitten innerhalb der Schaltkulisse gegeneinander geführt sind.

Bei letzterer Ausführungsform ist es insbesondere denkbar, dass der Schaltfinger außerhalb der Kulisse geführt wird, obgleich dies nicht notwendigerweise der Fall sein muss.

Insgesamt ist es ferner vorteilhaft, wenn drei Schaltglieder in axialer Richtung gegeneinander geführt werden, wobei eines der Schaltglieder zwischen den zwei anderen Schaltgliedern geführt ist.

Es ist jedoch genauso denkbar, dass mehr als drei Schaltglieder als Paket in der Schaltkulisse geführt werden.

Von besonderem Vorteil ist es bei Verwendung von drei Schaltgliedern jedoch, wenn der Mitnehmer des mittleren Schaltgliedes zwischen Schaltgliedkörpern der zwei anderen Schaltglieder geführt ist.

Dabei können auf vergleichsweise einfache Weise definierte Flächen an den Schaltgliedkörpern der zwei anderen Schaltglieder ausgebildet werden.

Ein besonderer Vorteil bei dieser Ausgestaltung liegt ferner darin, dass die Bearbeitung von Flächen an den Schaltgliedkörpern der zwei anderen Schaltglieder erfolgen kann, nachdem die Mitnehmer mit den jeweiligen Schaltgliedkörpern verbunden sind. Damit ist es möglich, die Mitnehmer mit großen Toleranzen an den Schaltgabelkörpern anzubringen (beispielsweise einzugießen). Da die definierten Flächen an den Schaltgliedkörpern erst hiernach angefertigt werden, kann eine hohe Präzision bei der Führung erzielt werden, auch wenn die Mitnehmer selbst mit vergleichsweise großen Toleranzen an den Schaltgliedkörpern angebracht sind.

Bei mehr als drei Schaltgliedern ist es beispielsweise denkbar, immer abwechselnd einen Schaltgliedkörper an einem Mitnehmer zu führen. Hierbei lassen sich auch bei mehr als drei Schaltgliedern ähnliche Vorteile erzielen.

Ferner ist es insgesamt bevorzugt, wenn das Paket an zwei axial ausgerichteten und einander gegenüberliegenden Seiten des Paketes an der Schaltkulisse geführt ist.

Mit anderen Worten ist es bei dieser Führung im "Paket" möglich, durch nur zwei definierte Führungsflächen an der Schaltkulisse sämtliche Schaltglieder der erfindungsgemäßen Schaltvorrichtung exakt zu führen.

Dabei ist es von besonderem Vorteil, wenn die Schaltkulisse als etwa rechteckförmige Öffnung in einem etwa axial ausgerichteten Kulissenbauteil (z.B. Schaltungsgehäuse) ausgebildet ist, innerhalb der das Paket geführt ist.

Obgleich eine Rechteckform generell einfach herzustellen ist, kann eine Form bevorzugt sein, bei der die Führungsflächen der generell rechteckigen Öffnung in den äußeren Bereichen schmäler und im Mittelbereich etwas breiter ausgeführt sind. Hierdurch kann der Schaltfinger in die Schaltkulisse hineinragen, wobei die Schaltkulisse den Wählanschlag für den Schaltfinger bilden kann.

Wenn, ein Schaltglied für eine Rückwärtsgangstufe direkt mit dem Mitnehmer eines Schaltgliedes gekoppelt ist, dem nur eine einzelne Vorwärtsgangstufe zugeordnet ist, ist es ferner vorteilhaft, wenn das Rückwärtsgangstufen-Schaltglied um eine Achse verschwenkbar gelagert ist, die quer zu der Axialrichtung ausgerichtet ist.

Hierdurch ist es möglich, dass das Rückwärtsgangstufen-Schaltglied durch eine Schwenkbewegung den Rückwärtsgang betätigt, beispielsweise durch Verschieben eines Schaltrades des Rückwärtsganges in axialer Richtung.

Gemäß einer bevorzugten Ausführungsform der Erfindung ist das Rückwärtsgangstufen-Schaltglied an einem Kulissenbauteil verschwenkbar gelagert, an dem die Schaltkulisse ausgebildet ist.

Hierdurch kann die Anzahl der Bauelemente weiter verringert werden. Das Kulissenbauteil (beispielsweise Schaltungsgehäuse) kann somit sowohl zur Realisierung der Schaltkulisse und damit zur Führung der Schaltglieder als auch zur Lagerung des Rückwärtsgangstufen-Schaltgliedes dienen.

Insgesamt ist es ferner vorteilhaft, wenn das Rückwärtsgangstufen-Schaltglied als Hebel ausgebildet ist, der an einem Ende mit dem Mitnehmer des zugeordneten Vorwärtsgangstufen-Schaltgliedes gekoppelt ist und der an seinem anderen Ende mit einem Rad des Rückwärtsganges zusammenwirkt, wobei das Schaltglied in einem Bereich dazwischen verschwenkbar gelagert ist.

Durch diese besondere Maßnahme kann mit nur einem Bauteil, nämlich dem Rückwärtsgangstufen-Schaltglied in Form eines Hebels auf einfache Weise ein Rad wie ein Schaltrad des Rückwärtsganges betätigt werden.

Es versteht sich jedoch, dass unter einem Zusammenwirken mit einem Rad des Rückwärtsganges auch verstanden werden soll, dass der Rückwärtsgang mittels einer Schaltmuffe betätigt wird, die ein Losrad des Wechselgetriebes mit einer Welle verbindet.

Ferner ist es insgesamt vorteilhaft, wenn das Rückwärtsgangstufen-Schaltglied durch eine Rasteinrichtung in zwei Stellungen arretierbar ist.

Dabei ist die eine Stellung generell die Stellung, in der der Rückwärtsgang eingelegt ist. Die andere Stellung entspricht einer Neutralstufe, wobei in dieser zweiten Stellung der zugeordnete Mitnehmer dazu verwendet werden kann, die diesem zugeordnete Vorwärtsgangstufe einzulegen.

Auch ist es insgesamt vorteilhaft, wenn die Kopplung zwischen dem Rückwärtsgangstufen-Schaltglied und dem Mitnehmer des Vorwärtsgangstufen-Schaltgliedes so ausgelegt ist, dass das Rückwärtsgangstufen-Schaltglied von dem Mitnehmer nicht mitgenommen wird, wenn dieser in einer Richtung zum Einlegen der zugeordneten Vorwärtsgangstufe bewegt wird.

Hierbei ist es von besonderem Vorteil, wenn das Rückwärtsgangstufen-Schaltglied mit einer Sperre zusammenwirkt, die das Rückwärtsgangstufen-Schaltglied sperrt, wenn das Vorwärtsgangstufen-Schaltglied in einer Richtung zum Einlegen der zugeordneten Vorwärtsgangstufe bewegt wird bzw. wenn diese Vorwärtsgangstufe eingelegt ist.

Von besonderem Vorteil ist es dabei, wenn die Sperre durch den so bewegten Mitnehmer selbst gebildet wird.

Auf diese Weise kann mit einfachen Mitteln und ohne zusätzlichen Bauteilaufwand verhindert werden, dass während der eingelegten Vorwärtsgangstufe gleichzeitig die Rückwärtsgangstufe betätigt wird.

Insgesamt ist es ebenfalls bevorzugt, wenn die Schaltwelle so gelagert ist, dass sie zum Anwählen von Gangstufen verschoben und zum Schalten von Gangstufen verdreht wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht einer Schaltvorrichtung gemäß einer ersten Ausführungsform der Erfindung;
- Fig. 2: eine schematische Querschnittsansicht durch die Schaltvorrichtung der Fig. 1;
- Fig. 2a: ein Detail IIa von Fig. 2;
- Fig. 3: eine weitere schematische Querschnittsansicht der Schaltvorrichtung der Fig. 1;
- Fig. 3a: eine der Fig. 3 vergleichbare Ansicht einer abgewandelten Ausführungsform der Schaltvorrichtung der Fig. 1;
- Fig. 4: eine Längsschnittansicht entlang der Linie IV-IV der Fig. 2, wobei sich sämtliche Schaltglieder in einer Neutralstellung befinden;
- Fig. 5: eine der Fig. 4 vergleichbare Ansicht bei geschaltetem Rückwärtsgang;
- Fig. 6: eine der Fig. 4 vergleichbare Ansicht bei geschaltetem 5. Gang; und
- Fig. 7: eine schematische Querschnittsansicht durch eine Ausführungsform einer Schaltvorrichtung (nicht beansprucht).

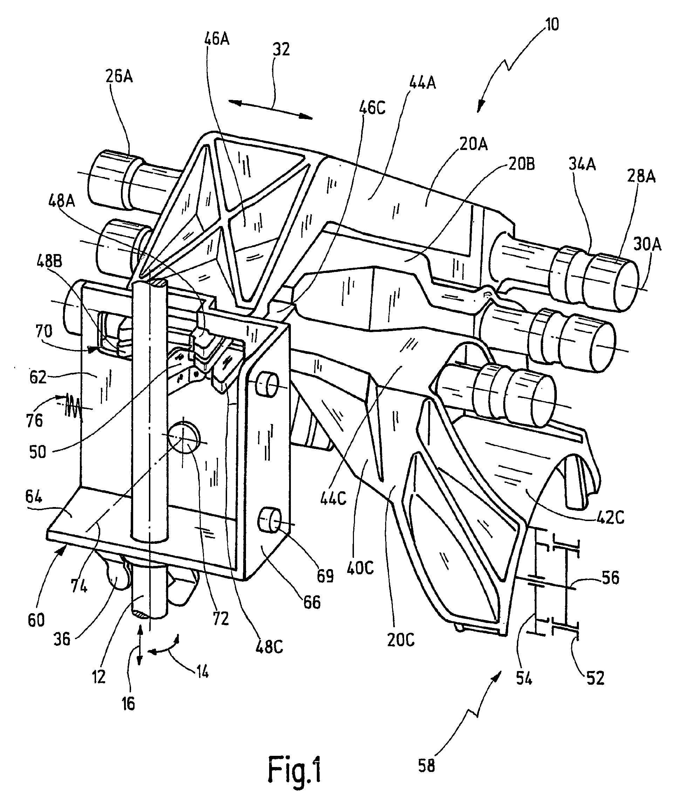

In Fig. 1 ist eine erste Ausführungsform der erfindungsgemäßen Schaltvorrichtung generell mit 10 bezeichnet.

Die Schaltvorrichtung 10 dient zum Einlegen von Gangstufen bzw. Gängen eines Wechselgetriebes für Kraftfahrzeuge, insbesondere eines Handschaltgetriebes üblicher Bauart (z.B. in Vorgelegebauweise).

Genauer gesagt dient die Schaltvorrichtung 10 zum Ein- und Auslegen von Vorwärtsgangstufen 1 bis 5, die jeweils durch Verschieben jeweiliger Schaltmuffen an einer Welle des Wechselgetriebes ein- bzw. ausgelegt werden. Ferner dient die Schaltvorrichtung 10 zum Ein- und Auslegen einer Rückwärtsgangstufe des Wechselgetriebes, wobei die Rückwärtsgangstufe durch Verschieben eines Schieberades ein- und ausgelegt wird.

Die Schaltvorrichtung 10 weist eine Schaltwelle 12 auf, die zum Schalten, d.h. Ein- und Auslegen von Gangstufen, verdreht wird, wie es bei 14 gezeigt ist. Zum Wählen von Gangstufen bzw. Gassen wird die Schaltwelle 12 in Längsrichtung versetzt, wie es in Fig. 1 bei 16 gezeigt ist.

Die Schaltwelle 12 kann in einem typischen Anwendungsfall über ein Schaltgestänge mit einem Handschalthebel gekoppelt sein, mittels dessen ein Fahrer des Kraftfahrzeuges die Gangstufen manuell ein- und auslegen kann.

Alternativ ist es jedoch auch denkbar, dass die Schaltwelle 12 mit einer Aktuatorik verbunden ist, beispielsweise einer hydraulischen oder elektromechanischen Aktuatoranordnung.

Die Schaltvorrichtung 10 weist eine erste Schaltgabel 20A für die Vorwärtsgangstufen 1/2, eine zweite Schaltgabel 20B für die Vorwärtsgangstufen 3/4 und eine dritte Schaltgabel 20C für die Vorwärtsgangstufe 5 und die Rückwärtsgangstufe auf.

Die Schaltgabeln 20 sind an ihren axialen Enden jeweils durch Lagerhülsen 26 bzw. 28 axial verschieblich gelagert. Die Achsen 30 der drei Schaltgabeln 20 sind parallel zueinander ausgerichtet und verlaufen gleichfalls parallel zu einer Schaltrichtung 32, in der Schaltmuffen des zugeordneten Wechselgetriebes bewegt werden, um Gangstufen ein- bzw. auszulegen.

An einer der Lagerhülsen (im vorliegenden Fall die Lagerhülse 28) ist eine Umfangsnut 34 eingearbeitet. Diese dient zur Arretierung der zugehörigen Schaltgabel 20. Beispielsweise kann die Schaltgabel 20A in einer Neutralposition arretiert werden.

Bei 36 ist ferner eine Schaltschwinge dargestellt, die zum Ein- und Auslegen der Rückwärtsgangstufe dient.

Jede der Schaltgabeln 20 weist einen Schaltgabelkörper 40 auf, der beispielsweise aus einem Leichtbaugussmaterial hergestellt sein kann, z.B. aus Aluminiumguss.

Die Schaltgabelkörper 40 weisen jeweils einen Gabelabschnitt 42 auf, der dazu ausgelegt ist, um in eine Umfangsnut einer zugeordneten Schaltmuffe zu greifen, um so mit dieser einen Formschluss in axialer Richtung einzurichten.

Ferner weisen die Schaltgabelkörper 40 jeweils einen in Axialrichtung 30 ausgerichteten Längsabschnitt 44 und einen sich quer hierzu erstreckenden Querabschnitt 46 auf. An dem Ende der Querabschnitte 46 ist jeweils ein Mitnehmer 48 angebracht. Die Mitnehmer 48 können jeweils aus Stahl, beispielsweise aus gehärtetem Stahl, hergestellt sein. Die Mitnehmer 48 sind mit den jeweiligen Schaltgabelkörpern 40 verbunden, indem die Mitnehmer 48 in den Schaltgabelkörper 40 eingegossen sind.

Die drei Mitnehmer 48 der drei Schaltgabeln 20 sind in Richtung hin zu der Schaltwelle 12 ausgerichtet und weisen an der zu der Schaltwelle 12 hinweisenden Stirnseite jeweils eine Ausnehmung auf. An der Schaltwelle 12 ist ein Schaltfinger 50 festgelegt.

Der Schaltfinger 50 besitzt Abmessungen, so dass er jeweils in eine Ausnehmung eines Mitnehmers 48 eingreift und durch Verdrehen 14 den jeweiligen Mitnehmer 48 und somit auch die zugeordnete Schaltgabel 20 in Axialrichtung 30 bzw. 32 bewegen kann.

Um die Funktionsweise der Schaltvorrichtung 10 näher zu veranschaulichen, ist im Bereich des Gabelabschnittes 42C der dritten Schaltgabel 20C ein Ausschnitt aus einem Wechselgetriebe 58 gezeigt. Das Wechselgetriebe 58 weist eine Welle 56 auf, die parallel zu der Axialrichtung 30 ausgerichtet ist. An der Welle 56 ist ein Losrad 54 für die Vorwärtsgangstufe 5 drehbar gelagert.

Ferner ist an der Welle 56 eine Schaltmuffe 52 axial verschieblich gelagert, die in an sich bekannter Weise dazu ausgelegt ist, einen Formschluss zwischen der Welle 56 und dem Losrad 54 herzustellen, um so die Vorwärtsgangstufe 5 einzulegen.

In Fig. 1 ist die Schaltvorrichtung 10 jedoch bei eingelegter Rückwärtsgangstufe gezeigt, was daran zu erkennen ist, dass der Mitnehmer 48C gegenüber einer Grundposition (in der die anderen Mitnehmer 48A, 48B liegen), axial versetzt ist, und zwar durch Verdrehung der Schaltwelle 12. Wenn der Mitnehmer 48C mittels des Schaltfingers 50 in die entgegengesetzte Richtung und über die Mittelstellung bzw. Neutralstellung hinaus bewegt wird, nimmt die Schaltgabel 20C die Schaltmuffe 52 in axialer Richtung mit, um so die Vorwärtsgangstufe 5 einzulegen.

Die Schaltvorrichtung 10 weist ferner ein Kulissenbauteil 60 auf, das beispielsweise aus Blech gebildet sein kann. Das Kulissenbauteil 60, das auch als Schaltungsgehäuse bezeichnet werden kann, weist eine Grundplatte 62 auf, die parallel zu der Schaltrichtung 32 und parallel zu der Schaltwelle 12 ausgerichtet ist.

Das Kulissenbauteil 60 weist ferner eine erste Querplatte 64 auf, die parallel zu der Schaltrichtung 32 und senkrecht zu der Schaltwelle 12 ausgerichtet ist. Die Schaltwelle 12 ist durch die erste Querplatte 64 hindurch geführt und hierdurch drehbar und verschieblich gelagert.

Das Kulissenbauteil 60 weist ferner eine zweite Querplatte 66 auf, die senkrecht zu der Schaltrichtung 32 und parallel zu der Schaltwelle 12 ausgerichtet ist. An der zweiten Querplatte 66 sind zwei Befestigungshülsen 68 ausgebildet, die dazu dienen, das Kulissenbauteil 60 an einem Gehäuse des Wechselgetriebes 58 zu befestigen.

In der Grundplatte 62 des Kulissenbauteils 60 ist eine Schaltkulisse 70 in Form einer etwa rechteckigen Öffnung ausgebildet. Die drei Mitnehmer 48A, 48B, 48C der drei Schaltgabeln 20A, 20B, 20C sind als ein Paket innerhalb der Schaltkulisse 70 geführt. Hierdurch ist eine exakte Führung zu dem Schaltfinger 50 und gegebenenfalls zu einer - nicht dargestellten - Gangsperre gewährleistet.

Die - nicht dargestellte - Gangsperre sorgt in an sich bekannter Weise dafür, dass jeweils nur eine der drei Schaltgabeln 20 aus der Mittelstellung heraus in eine Schaltposition versetzbar ist.

Durch die Führung als Paket innerhalb der Schaltkulisse 70 können Toleranzen zwischen den Radsätzen des Wechselgetriebes 58 und der Lagerung der Schaltvorrichtung in dem Getriebegehäuse aufgefangen werden. Diese Toleranzen beeinträchtigen folglich nicht die Schaltqualität.

Ferner ist es möglich, dass die Schaltgabeln 20 die jeweiligen Schaltmuffen zumindest in der Neutralstellung nicht berühren. Mit anderen Worten ist eine Zentrierung der Schaltgabeln 20 durch die jeweiligen zugeordneten Schaltmuffen nicht notwendig. Somit kann die Weitergabe von Anregungen aus dem Wechselgetriebe 58 auf die Schaltvorrichtung verhindert oder zumindest verringert werden.

Wie nachstehend noch erläutert werden wird, kann die Führung der Mitnehmer 48 zueinander erreicht werden, indem an den Schaltgabelkörpern 40A, 40C definierte Flächen erzeugt werden, die auf dem Mitnehmer 48B der Schaltgabel 20B laufen.

Da die Schaltkulisse 70 keine eigenen separaten Gassen für die Mitnehmer aufweist sondern im Wesentlichen als rechteckige Öffnung ausgebildet ist, kann der Abstand der Mitnehmer 48 zueinander gering gehalten werden. Dies kann den Schaltkomfort beim Gassenwechsel deutlich verbessern. Dies kann insbesondere auch dadurch erzielt werden, dass die Toleranzen der Mitnehmer 48 zueinander sehr gering gehalten werden können.

Die Schaltschwinge 36 für die Rückwärtsgangstufe ist ebenfalls an dem Kulissenbauteil 60 bzw. dem Schaltungsgehäuse gelagert. Hierzu ist an der Grundplatte 62 ein Schwenklager 72 eingerichtet, dessen Schwenkachse 74 senkrecht zu der Schaltrichtung 32 und senkrecht zu der Schaltwelle 12 ausgerichtet ist.

Ferner ist an dem Kulissenbauteil 60 eine in Fig. 1 nur schematisch angedeutete Rasteinrichtung 76 für die Schaltschwinge 36 angeordnet.

Durch diese Maßnahme kann die Schaltschwinge 36 einfach und direkt an dem zur Mitnehmerführung verwendeten Kulissenbauteil 60 gelagert werden. Ferner können, wie es nachstehend erläutert werden wird, Schaltbewegungen des Schaltfingers 50 direkt über dem Mitnehmer 48C der Schaltgabel 20C an die Schaltschwinge 36 weitergegeben werden.

Insgesamt ergibt sich so eine sehr geringe Teileanzahl bei hohen Toleranzen.

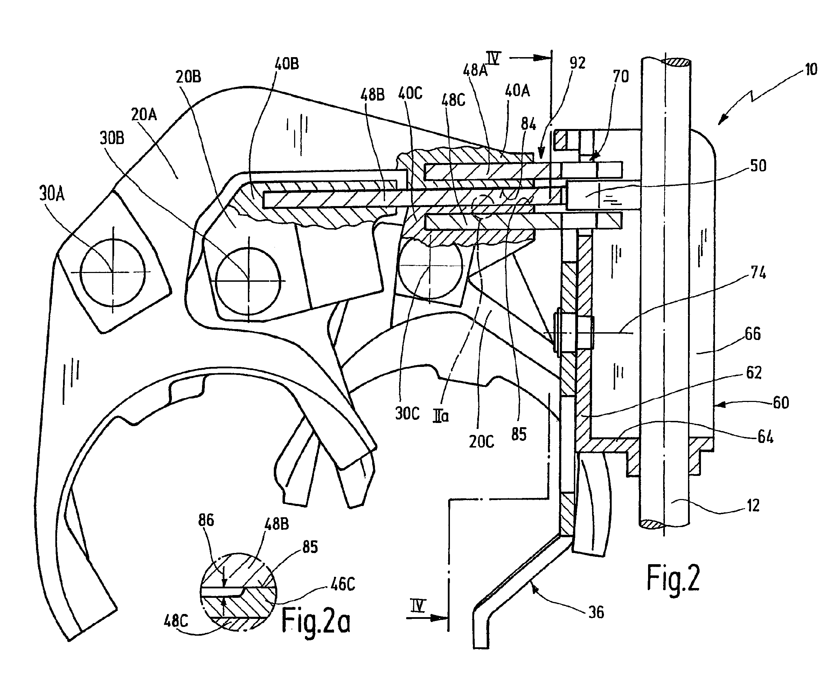

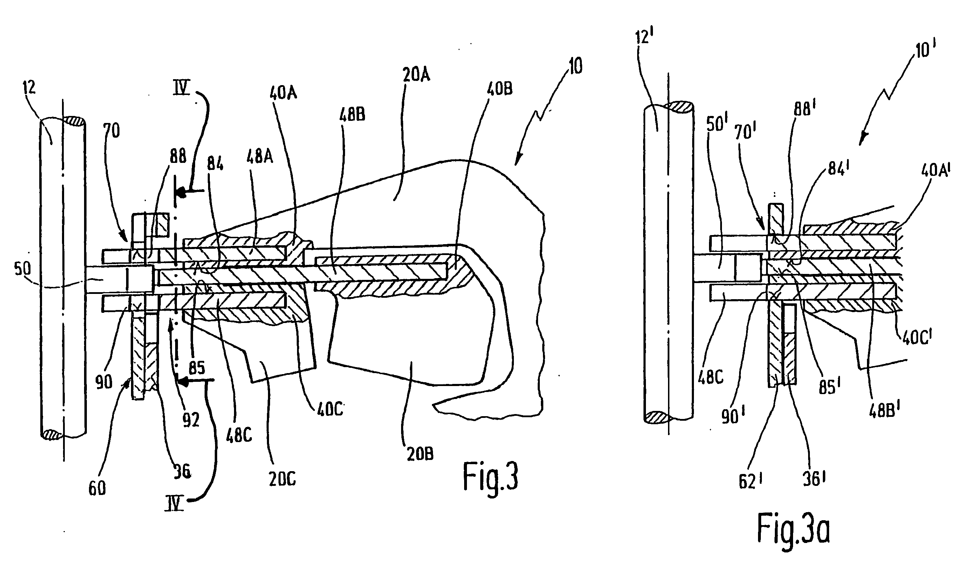

Fig. 2 und 3 zeigen jeweils Querschnittsansichten der Schaltvorrichtung 10 von unterschiedlichen Seiten. Fig. 2a zeigt dabei ein Detail 2a der Fig. 2.

Es ist zu erkennen, dass an dem Querabschnitt 46A der Schaltgabel 20A sowie an dem Querabschnitt 46C der Schaltgabel 20C jeweils eine Führungsfläche 84 bzw. 85 ausgebildet ist, wobei der Mitnehmer 48B der zweiten Schaltgabel 20B zwischen diesen Führungsflächen 84, 85 läuft. Für die Führungsfläche 85 ist dies im Detail in Fig. 2a dargestellt.

Die Führungsflächen 84, 85 werden vorzugsweise erst nach dem Anbringen der Mitnehmer 48 an den jeweiligen Schaltgabelkörpern 40 bearbeitet. Die Führungsflächen 84, 85 können durch diese Maßnahme beispielsweise genau zur Anlagefläche des jeweiligen Mitnehmers in der Schaltkulisse 70 des Kulissenbauteils 60 bearbeitet werden. Durch diese Maßnahme ist es möglich, die Mitnehmer 48 bei relativ hohen Toleranzen am dem Schaltgabelkörper 40 zu befestigen, insbesondere darin einzugießen.

In Fig. 2a ist ferner zu erkennen, dass zur Vermeidung von zu großer Reibung die Führungsflächen 84, 85 lediglich über einen begrenzten Abschnitt ausgearbeitet werden. Im Übrigen ist zwischen den Querabschnitten 46A, 46C und dem Mitnehmer 48B jeweils ein Abstand 86 eingerichtet.

Wie es in Fig. 2 und 3 dargestellt ist, stehen die drei Mitnehmer 48 gegenüber den Schaltgabelgrundkörpern 40 in einer Richtung quer zur Schaltrichtung vor und sind als Paket in der Schaltkulisse 70 geführt. Die Schaltwelle 12 ist so ausgerichtet, dass der Schaltfinger 50 ebenfalls in die Schaltkulisse 70 eingreift, jedoch von der anderen Seite der Grundplatte 62.

Die drei Mitnehmer 48 bilden ein Mitnehmerpaket 92, das innerhalb der Schaltkulisse 70 an einer oberen Führungsfläche 88 und einer unteren Führungsfläche 90 geführt ist.

Genauer gesagt liegt eine Oberseite des Mitnehmers 48A an der Führungsfläche 88 an. Eine Unterseite des Mitnehmers 48C liegt an der unteren Führungsfläche 90 an.

Da die Führungsflächen 88, 90 parallel zur Schaltrichtung 32 ausgerichtet sind, kann das Paket 92 aus den Mitnehmern 48 in Schaltrichtung 32 exakt geführt werden.

Fig. 3a zeigt eine abgewandelte Ausführungsform 10' der Schaltvorrichtung 10 der Fig. 1 bis 3.

Bei der Schaltvorrichtung 10' sind die Führungsflächen 84', 85' zwischen den Schaltgabelkörpern 40A', 40C' und dem Mitnehmer 48B' innerhalb der Schaltkulisse 70' ausgerichtet. Hierdurch kann eine noch exaktere Führung erreicht werden.

Bei dieser Ausführungsform reicht der Schaltfinger 50' nicht in die Schaltkulisse 70' hinein sondern greift an Abschnitten der Mitnehmer 48' an, die gegenüber der Grundplatte 62' zu der Schaltwelle 12' hin vorstehen.

Bei dieser Ausführungsform kann eine noch exaktere Führung erzielt werden.

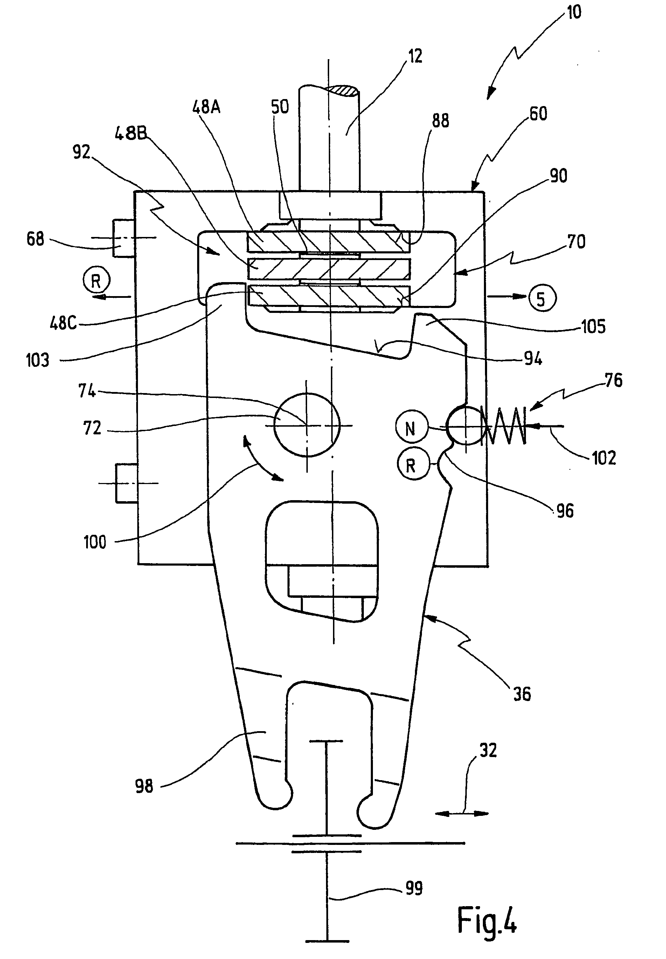

Fig. 4 zeigt eine Schnittansicht entlang der Linie IV-IV in Fig. 3.

Zum einen ist in der Darstellung der Fig. 4 zu erkennen, dass die Schaltkulisse 70 nicht exakt rechteckförmig ist sondern in den in Schaltrichtung äußeren Bereichen schmäler und im Mittelbereich etwas breiter ausgebildet ist.

In Fig. 4 ist zudem die Schaltschwinge 36 für die Rückwärtsgangstufe in größerer Genauigkeit dargestellt.

Die Schaltschwinge 36 ist nach der Art eines zweiseitigen Hebels verschwenkbar an dem Kulissenbauteil 60 gelagert. Ein oberes Ende der Schaltschwinge 36 ist dazu ausgelegt, mit dem Mitnehmer 48C in Eingriff zu treten, und zwar mittels eines Mitnahmemauls 94.

Ein unterer Abschnitt der Schaltschwinge 36 ist als Gabelabschnitt 98 ausgebildet und dazu ausgelegt, ein Schieberad 99 für die Rückwärtsgangstufe in Schaltrichtung 32 zu bewegen.

An einem seitlichen Abschnitt der Schaltschwinge 36 ist ferner eine Rastkontur 96 ausgebildet, die einen Teil der Rasteinrichtung 76 bildet. Durch die Rasteinrichtung 76 werden zwei Raststellungen der Schaltschwinge 36 eingerichtet, eine Neutralstellung N und eine Schaltstellung R für die Rückwärtsgangstufe.

Die Verschwenkrichtung der Schaltschwinge 36 ist in Fig. 4 bei 100 dargestellt.

Die mittels einer Rasteinrichtung (z.B. Rastkugel und Feder) auf die Rastkontur 96 aufgebrachte Rastkraft ist in Fig. 4 schematisch bei 102 dargestellt. Die Rasteinrichtung kann auch gebildet sein durch eine Formfeder mit Rastnase oder eine Schenkelfeder mit Raststift.

An dem oberen Ende weist die Schaltschwinge 36 eine Einlegeschaltnase 103 und eine Auslegeschaltnase 105 auf, zwischen denen das Mitnahmemaul 94 eingerichtet ist.

In Fig. 4 ist die Schaltschwinge 36 in der Neutralstellung N gezeigt. Hierbei liegt die Einlegeschaltnase 103 etwa auf der Höhe des Mitnehmers 48C. Die Auslegeschaltnase 105 liegt hingegen unterhalb des Mitnehmers 48C.

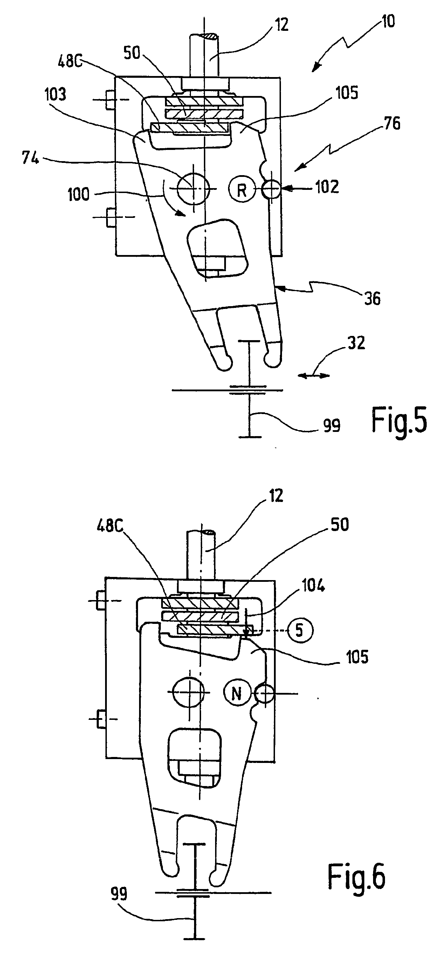

Fig. 5 zeigt eine der Fig. 4 vergleichbare Ansicht, wobei die Rückwärtsgangstufe R eingelegt ist.

Hierzu wird der Mitnehmer 48C mittels des Schaltfingers 50 verschoben. Der Mitnehmer 48C greift innerhalb des Mitnahmemauls 94 an der Einlegeschaltnase 103 an und verdreht die Schaltschwinge 36 in Richtung 100, bis die Schaltschwinge 36 mittels der Rasteinrichtung 76 in der Stellung R einrastet. Hierdurch wird das Schieberad 99 in Schaltrichtung 32 verschoben und die Rückwärtsgangstufe eingelegt.

Eine Besonderheit hierbei ist, dass der Schaltweg des Mitnehmers 48C durch die Schaltschwinge 36 übersetzt wird, und zwar durch die unterschiedliche Hebellänge in Bezug auf die Schwenkachse 74. Im vorliegenden Fall beträgt das Übersetzungsverhältnis 1:3.

Ferner ist eine Besonderheit darin zu sehen, dass die Schaltgabel 20C beim Schalten in den Rückwärtsgang einen Leerhub macht und dabei keine Synchronisierung betätigt.

Durch die Ausgestaltung der Rastkontur 96 kann der Schaltkraftverlauf beim Einlegen und Auslegen des Rückwärtsganges R bestimmt werden.

In Fig. 5 ist ferner zu erkennen, dass durch die Kippbewegung der Schaltschwinge 36 nunmehr die Auslegeschaltnase 105 auf der Höhe des Mitnehmers 48C liegt. Durch einen Rückhub des Mitnehmers 48C kann die Rückwärtsgangstufe folglich wieder ausgelegt werden.

Fig. 6 zeigt eine der Fig. 4 vergleichbare Ansicht, wobei die Vorwärtsgangstufe 5 eingelegt ist.

Man erkennt, dass die Schaltschwinge 36 hierbei gegenüber der Neutralstellung (Fig. 4) nicht bewegt wird.

Es ist jedoch zu erkennen, dass der Mitnehmer 48C bei eingelegter Vorwärtsgangstufe 5 sich über die Auslegeschaltnase 105 bewegt hat und folglich die Schaltschwinge 36 hierdurch in der Neutralstellung N arretiert. Durch diese Maßnahme bildet der Mitnehmer 48C mit der Auslegeschaltnase 105 eine Schaltsperre 104 für die Rückwärtsgangstufe.

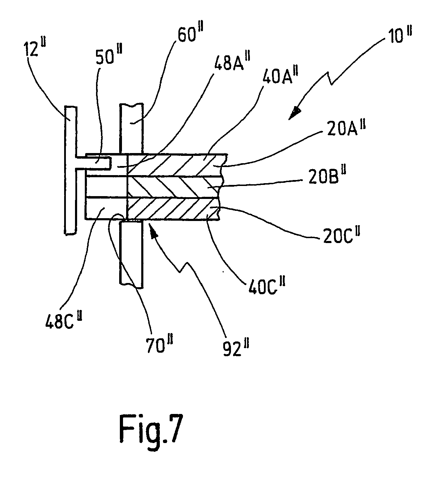

Fig. 7 zeigt eine nicht beanspruchte Ausführungsform einer Schaltvorrichtung 10". Die Schaltvorrichtung 10" entspricht hinsichtlich Aufbau und Funktionsweise generell der Schaltvorrichtung 10 der Fig. 1 bis 6. Im Folgenden wird lediglich auf Unterschiede eingegangen.

Bei der Schaltvorrichtung 10" sind die Mitnehmer 48" jeweils einstückig mit den Schaltgabelkörpern 40" ausgebildet und als einfaches Paket 92" ohne Beabstandung zueinander in einer Schaltkulisse 70" eines Kulissenbauteils 60" geführt.

Insgesamt ergibt sich durch die erfindungsgemäße Schaltvorrichtung wenigstens einer der folgenden Vorteile:

Durch die Abkopplung vom Radsatz und durch Zusammenfügen aller beweglichen Teile in einer Schaltungsbaugruppe lässt sich eine Toleranzminimierung erzielen, wodurch eine Verbesserung der Schaltqualität möglich wird.

Ferner kann durch die Abkopplung die Weiterleitung von Anregungen durch den Radsatz an die Schaltvorrichtung unterbunden werden.

Es kann eine Reduzierung der Teileanzahl für die Rückwärtsgangbetätigung erzielt werden.

Durch geänderte Fertigungsverfahren und die Vormontage der Schaltungsbaugruppe können Kosten in der Herstellung und der Montage minimiert werden.

## Patentansprüche

1. Schaltvorrichtung (10) zum Anwählen und Schalten von Gangstufen (1-5, R) eines Wechselgetriebes (58), insbesondere für Kraftfahrzeuge, mit mehreren Schaltgliedern (20A, 20B, 20C), die zur Betätigung von zugeordneten Schaltmuffen (52) in axialer Richtung (30) beweglich gelagert sind und jeweils einen Mitnehmer (48) aufweisen, mit einer drehbar und verschieblich gelagerten Schaltwelle (12), die einen Schaltfinger (50) aufweist, der wahlweise jeweils an einem Mitnehmer (48) angreift, um das jeweilige Schaltglied (20) bei einer Bewegung der Schaltwelle (12) mitzunehmen, und mit einer Schaltkulisse (70),
wobei die Schaltglieder (20) als Paket (92) in der Schaltkulisse (70) geführt sind und wenigstens zwei Schaltglieder (20) in axialer Richtung gegeneinander geführt sind, wobei die Schaltglieder (20) jeweils einen Schaltgliedkörper (40) aufweisen, mit dem der jeweilige Mitnehmer (48) verbunden ist,
**dadurch gekennzeichnet, dass**
die Mitnehmer (48) in den jeweiligen Schaltgliedkörper (40) eingegossen sind.

2. Schaltvorrichtung nach Anspruch 1, wobei die Mitnehmer (48) der Schaltglieder (20) als Paket (92) in der Schaltkulisse (70) geführt sind.

3. Schaltvorrichtung nach Anspruch 1 oder 2, wobei die Mitnehmer (48) der Schaltglieder (20) voneinander beabstandet sind.

4. Schaltvorrichtung nach einem der Ansprüche 1 bis 3, wobei die Schaltglieder (20) an Abschnitten (84, 85) außerhalb der Schaltkulisse (70) gegeneinander geführt sind.

5. Schaltvorrichtung nach einem der Ansprüche 1 bis 3, wobei die Schaltglieder (20) an Abschnitten (84', 85') innerhalb der Schaltkulisse (70) gegeneinander geführt sind.

6. Schaltvorrichtung nach einem der Ansprüche 1 bis 5, wobei drei Schaltglieder (20) in axialer Richtung (30) gegeneinander geführt werden, wobei eines (20B) der Schaltglieder (20) zwischen den zwei anderen Schaltgliedern (20A, 20C) geführt ist.

7. Schaltvorrichtung nach Anspruch 1 und 6, wobei der Mitnehmer (48B) des mittleren Schaltgliedes (20B) zwischen Schaltgliedkörpern (40A, 40C) der zwei anderen Schaltglieder (20A, 20C) geführt ist.

8. Schaltvorrichtung nach einem der Ansprüche 1 bis 7, wobei das Paket (92) an zwei axial ausgerichteten und einander gegenüberliegenden Seiten (88, 90) des Paketes (92) an der Schaltkulisse (70) geführt ist.

9. Schaltvorrichtung nach einem der Ansprüche 1 bis 8, wobei die Schaltkulisse (70) als etwa rechteckförmige Öffnung (70) in einem etwa axial ausgerichteten Kulissenbauteil (60) ausgebildet ist, innerhalb der die sich quer zu der axialen Richtung (30) erstreckenden Mitnehmer geführt sind.

10. Schaltvorrichtung nach einem der Ansprüche 1 bis 9, wobei ein Schaltglied (36) für eine Rückwärtsgangstufe (R) direkt mit dem Mitnehmer (48C) eines Schaltgliedes (20C) gekoppelt ist, dem nur eine einzelne Vorwärtsgangstufe (5) zugeordnet ist.

11. Schaltvorrichtung nach Anspruch 10, wobei das Rückwärtsgangstufen-Schaltglied (36) um eine Achse (74) verschwenkbar gelagert ist, die quer zu der Axialrichtung (30) ausgerichtet ist.

12. Schaltvorrichtung nach Anspruch 10 oder 11, wobei das Rückwärtsgangstufen-Schaltglied (36) an dem Kulissenbauteil (60) verschwenkbar gelagert ist, an dem die Schaltkulisse (70) ausgebildet ist.

13. Schaltvorrichtung nach einem der Ansprüche 10 bis 12, wobei das Rückwärtsgangstufen-Schaltglied (36) als Hebel ausgebildet ist, der an einem Ende mit dem Mitnehmer (48C) des Vorwärtsgangstufen-Schaltglieds (20C) gekoppelt ist und an seinem anderen Ende mit einem Rad (99) des Rückwartsganges (R) zusammenwirkt, wobei das Schaltglied (36) in einem Bereich dazwischen verschwenkbar gelagert ist.

14. Schaltvorrichtung nach einem der Ansprüche 10 bis 13, wobei das Rückwärtsgangstufen-Schaltglied (36) durch eine Rasteinrichtung (76) in zwei Stellungen arretierbar ist.

15. Schaltvorrichtung nach einem der Ansprüche 10 bis 14, wobei die Kopplung zwischen dem Rückwärtsgangstufen-Schaltglied (36) und dem Mitnehmer (48C) des Vorwärtsgangstufen-Schaltgliedes (20C) so ausgelegt ist, dass das Rückwärtsgangstufen-Schaltglied (36) von dem Mitnehmer (48C) nicht mitgenommen wird, wenn dieser in einer Richtung zum Einlegen der zugeordneten Vorwärtsgangstufe (5) bewegt wird.

16. Schaltvorrichtung nach einem der Ansprüche 10 bis 15, wobei das Rückwärtsgangstufen-Schaltglied (36) mit einer Sperre (104) zusammenwirkt, die das Rückwärtsgangstufen-Schaltglied (36) sperrt, wenn das Vorwärtsgangstufen-Schaltglied (20C) in einer Richtung zum Einlegen der zugeordneten Vorwärtsgangstufe (5) bewegt wird.

17. Schaltvorrichtung nach einem der Ansprüche 1 bis 16, wobei die Schaltwelle (12) so gelagert ist, dass sie zum Anwählen von Gangstufen verschoben (16) und zum Schalten von Gangstufen verdreht (14) wird.

## Claims

1. A gear-shifting device (10) for selecting and shifting gears (1-5, R) of a gearbox (58), especially for motor vehicles, comprising a plurality of gear-shifting elements (20A, 20B, 20C), which are displaceably mounted in such a way as to actuate associated gearshift sleeves (52) in the axial direction (30) and which each have a driving element (48), a rotatably and displaceably mounted gear-shift lever shaft (12) having a shift finger (50) that selectively acts upon one driving element (48) at a time in order to drive the respective gear-shifting element (20) during a movement of the gearshift lever shaft (12), and a shifting gate (70),
wherein the gear-shifting elements (20) are guided as a group (92) in the shifting gate (70), and wherein at least two gear-shifting elements (20) are guided in the axial direction against each other, wherein the gear-shifting elements (20) each comprise a gear-shifting element body (40), to which the respective driving element (48) is fixed,
**characterized in that**
the driving elements (48) are cast into the respective gear-shifting element body (40).

2. The gear-shifting device as claimed in claim 1, wherein the driving elements (48) of the gear-shifting elements (20) are guided as a group (92) in the shifting gate (70).

3. The gear-shifting device as claimed in claim 1 or 2, wherein the driving elements (48) of the gear-shifting elements (20) are spaced at a distance from one another.

4. The gear-shifting device as claimed in any one of claims 1 to 3, wherein the gear-shifting elements (20) are guided on sections (84, 85) outside the shifting gate (70) against each other.

5. The gear-shifting device as claimed in any one of claims 1 to 3, wherein the gear-shifting elements (20) are guided on sections (84', 85') inside the shifting gate (70) against each other.

6. The gear-shifting device as claimed in any one of claims 1 to 5, wherein three gear-shifting elements (20) are guided in the axial direction (30) against each other, wherein one (20B) of the gear-shifting elements (20) is guided between the other two gear-shifting elements (20A, 20C).

7. The gear-shifting device as claimed in claim 1 and 6, wherein the driving element (48B) of the middle gear-shifting element (20B) is guided between the gear-shifting element bodies (40A, 40C) of the other two gear-shifting elements (20A, 20C).

8. The gear-shifting device as claimed in any one of claims 1 to 7, wherein the group (92) is guided on the shifting gate (70) on two axially aligned and opposing sides (88, 90) of the group (92).

9. The gear-shifting device as claimed in any one of claims 1 to 8, wherein the shifting gate (70) takes the form of an approximately rectangular opening (70) in a gate component (60) aligned approximately axially, inside which the driving elements are guided which extend in a direction transverse to the axial direction (30).

10. The gear-shifting device as claimed in any one of claims 1 to 9, wherein a gear-shifting element (36) for a reverse gear (R) is coupled directly to the driving element (48C) of a gear-shifting element (20C), with which only a single forward gear (5) is associated.

11. The gear-shifting device as claimed in claim 10, wherein the reverse gear-shifting element (36) is supported so that it can pivot about an axis (74), which is aligned transversely to the axial direction (30).

12. The gear-shifting device as claimed in claim 10 or 11, wherein the reverse gear-shifting element (36) is pivotably supported on a gate component (60) on which the shifting gate (70) is formed.

13. The gear-shifting device as claimed in any one of claims 10 to 12, wherein the reverse gear-shifting element (36) takes the form of a lever, which at one end is coupled to the driving element (48C) of the forward gear-shifting element (20C) and which at its other end interacts with a gear (99) of the reverse gear (R), the gear-shifting element (36) being pivotably supported in an area between them.

14. The gear-shifting device as claimed in any one of claims 10 to 13, wherein the reverse gear-shifting element (36) can be arrrested in two positions by a detent device (76).

15. The gear-shifting device as claimed in any one of claims 10 to 14, wherein the coupling between the reverse gear-shifting element (36) and the driving element (48C) of the forward gear-shifting element (20C) is designed so that the reverse gear-shifting element (36) is not driven by the driving element (48C) when the latter is moved in a direction for the engagement of the associated forward gear (5).

16. The gear-shifting device as claimed in any one of claims 10 to 15, wherein the reverse gear-shifting element (36) interacts with a lock (104), which locks the reverse gear-shifting element (36) when the forward gear-shifting element (20C) is moved in a direction for the engagement of the associated forward gear (5).

17. The gear-shifting device as claimed in any one of claims 1 to 16, wherein the gear-shift lever shaft (12) is supported so that it is displaced (16) for the selection of gears and rotated (14) for the shifting of gears.

## Revendications

1. Dispositif de changement de vitesse (10) pour sélectionner et passer des rapports (1-5, R) d'une boîte de vitesses (58), notamment pour des véhicules automobiles, avec plusieurs organes de commutation (20A, 20B, 20C) qui sont montés à déplacement en direction axiale (30) afin d'actionner des manchons de commutation associés (52) et qui présentent chacun un entraîneur (48), avec un arbre (12) de changement de vitesse monté à rotation et à translation, qui présente un doigt de commande (50) qui agit sélectivement sur un entraîneur respectif (48) pour entraîner conjointement l'organe de commutation respectif (20) lors d'un déplacement de l'arbre (12) de changement de vitesse, et avec une coulisse de guidage (70),
sachant que les organes de commutation (20) sont guidés sous forme de groupe (92) dans la coulisse de guidage (70) et qu'au moins deux organes de commutation (20) sont guidés l'un par rapport à l'autre en direction axiale,
sachant que les organes de commutation (20) présentant chacun un corps (40) d'organe de commutation auquel est relié l'entraîneur respectif (48),
**caractérisé en ce que** les entraîneurs (48) sont incorporés par coulage dans les corps (40) d'organe de commutation respectifs.

2. Dispositif de changement de vitesse selon la revendication 1, sachant que les entraîneurs (48) des organes de commutation (20) sont guidés sous forme de groupe (92) dans la coulisse de guidage (70).

3. Dispositif de changement de vitesse selon la revendication 1 ou 2, sachant que les entraîneurs (48) des organes de commutation (20) sont distants les uns des autres.

4. Dispositif de changement de vitesse selon l'une des revendications 1 à 3, sachant que les organes de commutation (20) sont guidés les uns par rapport aux autres sur des parties (84, 85) à l'extérieur de la coulisse de guidage (70).

5. Dispositif de changement de vitesse selon l'une des revendications 1 à 3, sachant que les organes de commutation (20) sont guidés les uns par rapport aux autres sur des parties (84', 85') à l'intérieur de la coulisse de guidage (70).

6. Dispositif de changement de vitesse selon l'une des revendications 1 à 5, sachant que trois organes de commutation (20) sont guidés en direction axiale (30) les uns par rapport aux autres, l'un (20B) des organes de commutation (20) étant guidé entre les deux autres organes de commutation (20A, 20C).

7. Dispositif de changement de vitesse selon les revendications 1 et 6, sachant que l'entraîneur (48B) de l'organe de commutation intermédiaire (20B) est guidé entre les corps (40A, 40C) des deux autres organes de commutation (20A, 20C).

8. Dispositif de changement de vitesse selon l'une des revendications 1 à 7, sachant que le groupe (92) est guidé sur la coulisse de guidage (70) sur deux côtés (88, 90) du groupe (92) qui sont orientés axialement et mutuellement opposés.

9. Dispositif de changement de vitesse selon l'une des revendications 1 à 8, sachant que la coulisse de guidage (70) est réalisée sous forme d'ouverture environ rectangulaire (70) dans une pièce de coulisse (60) orientée environ axialement, à l'intérieur de laquelle sont guidés les entraîneurs s'étendant transversalement à la direction axiale (30).

10. Dispositif de changement de vitesse selon l'une des revendications 1 à 9, sachant qu'un organe de commutation (36) pour un rapport arrière (R) est directement accouplé à l'entraîneur (40C) d'un organe de commutation (20C) auquel est associé un seul rapport avant (5).

11. Dispositif de changement de vitesse selon la revendication 10, sachant que l'organe (36) de commutation de rapport arrière est monté à pivotement autour d'un axe (74) qui est orienté transversalement à la direction axiale (30).

12. Dispositif de changement de vitesse selon la revendication 10 ou 11, sachant que l'organe (36) de commutation de rapport arrière est monté à pivotement sur la pièce de coulisse (60) sur laquelle est formée la coulisse de guidage (70).

13. Dispositif de changement de vitesse selon l'une des revendications 10 à 12, sachant que l'organe (36) de commutation de rapport arrière est réalisé sous forme de levier qui est accouplé à une extrémité à l'entraîneur (48C) de l'organe (20C) de commutation de rapport avant et qui, à son autre extrémité, coopère avec un pignon (99) du rapport arrière (R), l'organe de commutation (36) étant monté à pivotement dans une région intermédiaire.

14. Dispositif de changement de vitesse selon l'une des revendications 10 à 13, sachant que l'organe (36) de commutation de rapport arrière peut être bloqué dans deux positions par un moyen de crantage (76).

15. Dispositif de changement de vitesse selon l'une des revendications 10 à 14, sachant que l'accouplement entre l'organe (36) de commutation de rapport arrière et l'entraîneur (48C) de l'organe (20C) de commutation de rapport avant est conçu de telle sorte que l'organe (36) de commutation de rapport arrière n'est pas conjointement entraîné par l'entraîneur (48C) lorsque ce dernier est déplacé dans une direction pour l'engagement du rapport avant associé (5).

16. Dispositif de changement de vitesse selon l'une des revendications 10 à 15, sachant que l'organe (36) de commutation de rapport arrière coopère avec un verrouilleur (104) qui verrouille l'organe (36) de commutation de rapport arrière lorsque l'organe (20C) de commutation de rapport avant est déplacé dans une direction pour l'engagement du rapport avant associé (5).

17. Dispositif de changement de vitesse selon l'une des revendications 1 à 16, sachant que l'arbre (12) de changement de vitesse est monté de telle sorte qu'il est déplacé en translation (26) pour sélectionner des rapports et en rotation (14) pour passer des rapports.
